# EUROPÄISCHE PATENTSCHRIFT

(11) **EP 1 637 372 B1**
(45) Veröffentlichungstag und Bekanntmachung des Hinweises auf die Patenterteilung: **23.04.2008**
(21) Anmeldenummer: 05015853.4
(22) Anmeldetag: 21.07.2005
(51) Int. Cl.: B60H 3/06, B01D 46/10

(54) **Filter und Verfahren zum Selbstreinigen des Filters**
Filter and method for self-cleaning said filter
Filtre et méthode d'auto-nettoyage dudit filtre

(30) Priorität: 24.08.2004 DE 102004040894
(43) Veröffentlichungstag der Anmeldung: 22.03.2006
(73) Patentinhaber: Bayerische Motoren Werke Aktiengesellschaft, 80809 München (DE)
(72) Erfinder: Novotny, Georg, 4400 Steyr (AT); Wimmer, Rudolf, 4431 Haidershofen (AT); Niederhauser, Dieter, 4600 Wels (AT); Debevec, Christian, 4595 Waldneukirchen (AT)

(56) Entgegenhaltungen:
- DE-A1- 3 924 293
- GB-A- 1 476 098

## Beschreibung

Die vorliegende Erfindung betrifft einen Filter, eine Zuführung insbesondere für Luft, welche den Filter umfasst, ein Kraftfahrzeug, das den Filter oder die Zuführung aufweist, ein Verfahren zum Selbstreinigen des Filters sowie die Verwendung eines elastischen Gitters.

Aus der DE 39 24 293 A1 ist eine Vorrichtung zur Frischluftzufuhr zum Fahrgastraum eines Fahrzeuges, das einen dem Fahrgastraum in Fahrtrichtung vorgelagerten Karosserievorbau aufweist, bekannt. Die Vorrichtung weist einen Frischlufteinlass und einen darunter liegenden Luftverteilerkasten auf, der zum Frischlufteinlass hin mit einem Luftfilter versehen ist. Zwischen dem Luftfilter und dem Frischlufteinlass ist lösbar ein haubenartiger Filterdeckel angeordnet, der einerseits einen schnellen und problemlosen Filterwechsel ohne einen Werkstattaufenthalt ermöglicht und andererseits den Luftfilter gegen Nässe schützt.

Aus der DE 24 47 886 C3 oder GB 1476098A vor der die Erfindung ausgeht, ist ein selbstreinigender Filter bekannt, der zwei parallel zueinander angeordnete Gitter aufweist, welche in einem Fluidstrom anordenbar sind. Die Gitter sind, insbesondere bei einer Verschmutzung mit Schmutzpartikeln, beim Durchströmen des Fluidstromes in einer Strömungsrichtung von einer Grundform in eine konkave Strömungsform reversibel verformbar. Bei einer Rückverformung der Gitter von der Strömungsform in die Grundform werden gegebenenfalls vorhandene Schmutzpartikel von zumindest dem in Strömungsrichtung vorne liegenden Gitter abgeworfen. Damit dieser Mechanismus funktioniert, ist zwischen den Gittern ein federelastisches Element angeordnet, das bei annähernd gleichem Druck auf beiden Seiten des Filters zumindest das vorne liegende Gitter in seine Grundform drückt, damit gesammelte Schmutzpartikel abgeworfen werden.

Nachteilig an dem gattungsgemäßen Filter ist der aufwändige, doppelwandige Aufbau mit dem zwischen den Gittern angeordneten federelastischen Element.

Aufgabe der Erfindung ist es einen einfach herzustellenden, kostengünstigen selbstreinigenden Filter, insbesondere für Grobschmutz, zur Verfügung zu stellen.

Diese Aufgabe wird mit einem Filter mit den Merkmalen im kennzeichnenden Teil des Patentanspruchs 1 gelöst.

Erfindungsgemäß ist das Gitter in seiner Grundform entgegen der Strömungsrichtung bombiert, wobei das Gitter selbsztzurückformbar ausgeführt ist. Das Zurückformen in diese bombierte Grundform erfolgt vorzugsweise ruckartig, so dass die Schmutzpartikel beim Zurückformen besser vom Gitter abgeworfen werden, und das Gitter besser gereinigt wird. Eine Bombierung ist einfach herstellbar. In vorteilhafter Weise weist der Filter ein Gitter auf, welches in einem Fluidstrom angeordnet ist, wobei sich das Gitter, insbesondere wenn es mit Schmutzpartikeln wie beispielsweise Blättern und dergleichen belegt ist, beim Durchströmen des Fluidstromes in Strömungsrichtung von einer Grundform in eine Strömungsform reversibel verformt. Durch die Anordnung des Gitters wird Grobschmutz aus dem Fluidstrom gefiltert. Das Gitter ist einfach und kostengünstig herstellbar. Weiterhin erfindungsgemäß wirft das Gitter beim Zurückformen von der Strömungsform (S) in die Grundform (G) und vorzugsweise im Wesentlichen entgegen der Strömungsrichtung Schmutzpartikel ab. Dadurch erfolgt bei oder nach Unterbrechen des Fluidstromes eine Selbstreinigung des Filters. Sowohl in kurzfristiger als auch in langfristiger Hinsicht verschmutzt der Filter nicht so stark, wie ein nicht selbstreinigender Filter, wodurch die Reinigung bzw. ein Austausch des Filters weniger häufig vorgenommen werden muss. Die Lebensdauer des Filters ist daher größer. Der Filter ist daher wartungsarm, umweltfreundlich und kostengünstig.

Vorzugsweise weist das unverschmutzte Gitter nahezu keinen Strömungswiderstand und keinen Druckverlust auf. Beim An- bzw. Durchströmen des Gitters, insbesondere im Fall einer Verschmutzung, beispielsweise mit einem Blatt, verformt sich das Gitter reversibel von einer Grundform in eine Strömungsform, insbesondere aufgrund eines durch die Verschmutzung bedingtem erhöhten Druckgefälles und/oder eines erhöhten Strömungswiderstandes. Sobald die An- bzw. Durchströmung des Gitters wegfällt, entfällt sowohl das Druckgefälle als auch der Strömungswiderstand und das Gitter formt sich zurück und reinigt sich dabei.

Vorzugsweise ist der Fluidstrom ein Gasstrom, bevorzugt ein Luftstrom.

Bevorzugt ist das Gitter aus einem wärmestabilen Material, besonders bevorzugt einem Kunststoff, ganz besonders bevorzugt aus einem thermoplastischen Kunststoff, gefertigt. Das Gitter ist vorteilhafter Weise mit herkömmlichen Verfahren zur Verarbeitung von Kunststoffen, beispielsweise Spritzgießen, und daher kostengünstig, herstellbar. Die Verwendung von einem thermoplastischen Kunststoff ist aufgrund seiner wärmestabilen Eigenschaften vorteilhaft. Der Fachmann versteht, dass jedes Material geeignet ist, das im wesentlichen temperaturunabhängig reversibel elastisch verformbar ist.

In einer bevorzugten Ausführungsform weist der Filter Mittel zum Befestigen auf, besonders bevorzugt Schnappverschlüsse. Dadurch ist die Montage, der Austausch und der Ein- und Ausbau des Filters schnell und einfach durchführbar.

Vorzugsweise ist der Filter an einem Rohrende angeordnet, so dass Partikel, die abgeworfene Partikel werden, nach unten fallen.

Der erfindungsgemäße Filter ist kostengünstig und mit herkömmlichen Verfahren herstellbar. Er ist leicht und schnell ein- und ausbaubar. Mit dem Filter können Schmutzpartikel, insbesondere Laub und Grobschmutz von Luftzuführungen, gefiltert werden. Aufgrund der selbstreinigenden Funktion ist der Filter wartungsarm, umweltfreundlich und kostengünstig.

Ein weiterer Gegenstand der vorliegenden Erfindung ist eine Zuführung, insbesondere für Luft, die einen erfindungsgemäßen Filter umfasst, dessen Gitter im Querschnitt der Zuführung angeordnet ist. Dadurch werden Schmutzpartikel aus einem Fluidstrom, der die Zuführung durchströmt, herausgefiltert.

Vorzugsweise ist die Zuführung rohrartig. Der Filter wird in dem Querschnitt des Rohres, vorzugsweise an dessen Eintrittsende, an dem der Fluidstrom in das Rohr strömt, angeordnet, so dass sich die Schmutzpartikel nach dem Abwerfen vom Gitter nicht mehr in der Zuführung befinden, sondern von der Zuführung weggeschleudert werden. Vorteilhafterweise ist der Filter daher auch leicht zugänglich und lässt sich schnell und bevorzugt ohne Werkzeugeinsatz demontieren.

In einer bevorzugten Ausführungsform wird der Filter zumindest teilweise im Bereich der Mittel zum Befestigen durchströmt. Das Fluid durchströmt daher den Filter am Gitter vorbei, so dass auch bei starker Verschmutzung des Gitters der Fluidstrom nicht vollständig abbricht. Dieser Luftstrom wird auch als Falschluft bezeichnet.

Vorzugsweise weist die Zuführung ein Mittel zum Begrenzen der Verformung auf, so dass das Gitter nicht beschädigt wird. Vorzugsweise weist das Gitter seine maximale Verformung bei einem Druckgefälle in Strömungsrichtung von ca. 160 - 200mbar, besonders bevorzugt von ca. 180mbar, auf.

Bevorzugt ist die Zuführung ein Teil eines Motors oder einer Lüftung. Besonders bevorzugt ist die Zuführung ein Teil der Luftzufuhr eines Motors oder einer Lüftung. Dadurch wird die Luft vor der Zuführung zu einem Feinfilter, zum Motor und/oder in die Lüftung von Schmutzpartikeln gereinigt. Beispielsweise ein Feinfilter muss daher weniger häufig gewechselt werden, da er weniger schnell verstopft und seine Lebensdauer des Feinfilters ist daher höher.

Ein weiterer Gegenstand der vorliegenden Erfindung ist ein Kraftfahrzeug, das einen erfindungsgemäßen Filter oder eine erfindungsgemäße Zuführung aufweist. Durch die Selbstreinigung des Filters muss die Reinigung oder der Austausch des Filters oder eines nachfolgenden Filters, beispielsweise eines Feinfilters, weniger häufig erfolgen, so dass die Wartung des Kraftfahrzeugs insgesamt kostengünstiger ist. Durch einen geringeren Ansaugdruckverlust steigt der Wirkungsgrad des Motors.

Ein weiterer Gegenstand der vorliegenden Erfindung ist ein Verfahren zum Selbstreinigen eines erfindungsgemäßen Filters, wobei sich das Gitter in Strömungsrichtung verformt, wenn es von einem Fluid durchströmt wird, und wobei sich dass Gitter zurückformt, wenn es nicht mehr durchströmt wird und dabei Schmutzpartikel abwirft. Dadurch erfolgt die Reinigung des Filters immer, wenn das Durchströmen des Gitters mit einem Fluid unterbrochen wird. Die Qualität des zugeführten Fluids ist daher hoch und die Lebensdauer des Filters ist daher groß und sein Druckverlust gering.

Ein weiterer Gegenstand der vorliegenden Erfindung ist die Verwendung eines elastischen Gitters als selbstreinigender Filter. Ein elastisches Gitter ist kostengünstig und mit herkömmlichen Verfahren herstellbar. Die Elastizität des Gitters ermöglicht das reversible Verformen des Gitters, so dass sich das Gitter bei Durchströmen eines Fluids verformt und bei Abbruch der Durchströmung automatisch zurückformt, wobei es sich selbst reinigt.

Vorzugsweise wird der Filter in einem Kraftfahrzeug, insbesondere in einem Verbrennungsmotor oder in einer Lüftung, verwendet. Über die Betriebszeit des Kraftfahrzeugs gesehen ist die Wartung des Fahrzeugs aufgrund der Selbstreinigung des Filters gering.

Im folgenden wird die Erfindung anhand von Figuren beschrieben. Die Figuren sind lediglich beispielhaft und schränken den allgemeinen Erfindungsgedanken nicht ein.
- **Figur 1**: zeigt einen erfindungsgemäßen Filter in der Grundform.
- **Figur 2**: zeigt den Filter der **Figur 1** in der Strömungsform.
- **Figur 3**: zeigt eine erfindungsgemäße Zuführung in einer Explosionsdarstellung.

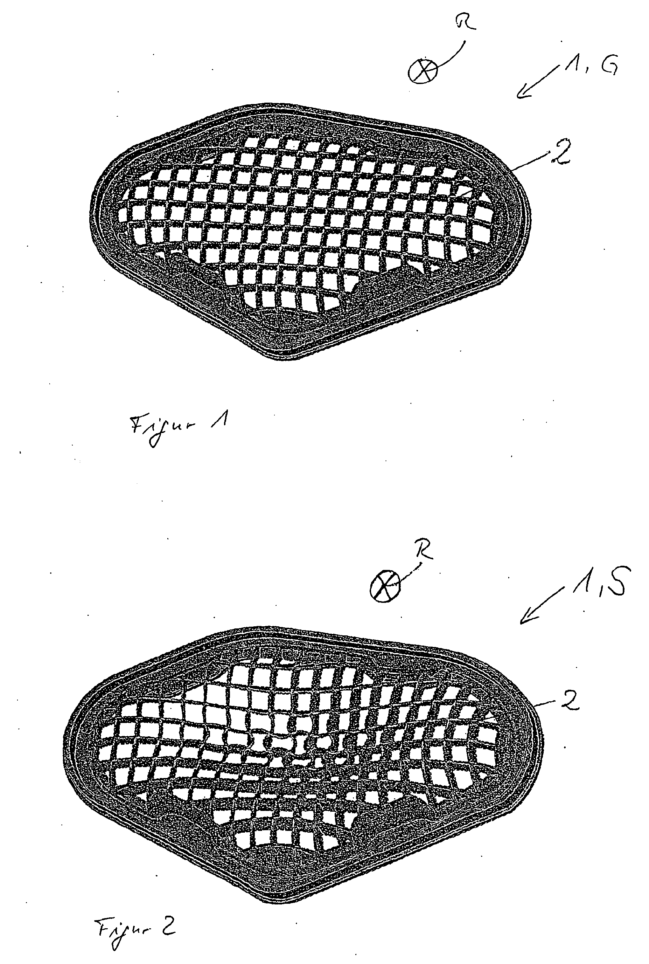

**Figur 1** zeigt einen erfindungsgemäßen Filter 1 in der Grundform G. Der Filter 1 weist ein Gitter 2 auf, das entgegen der Strömungsrichtung, die in die Papierebene hineingeht und durch einen Pfeil R angedeutet ist, bombiert ist.

**Figur 2** zeigt den Filter 1 der **Figur 1** in der Strömungsform S. Das Gitter 2 ist in Strömungsrichtung R verformt.

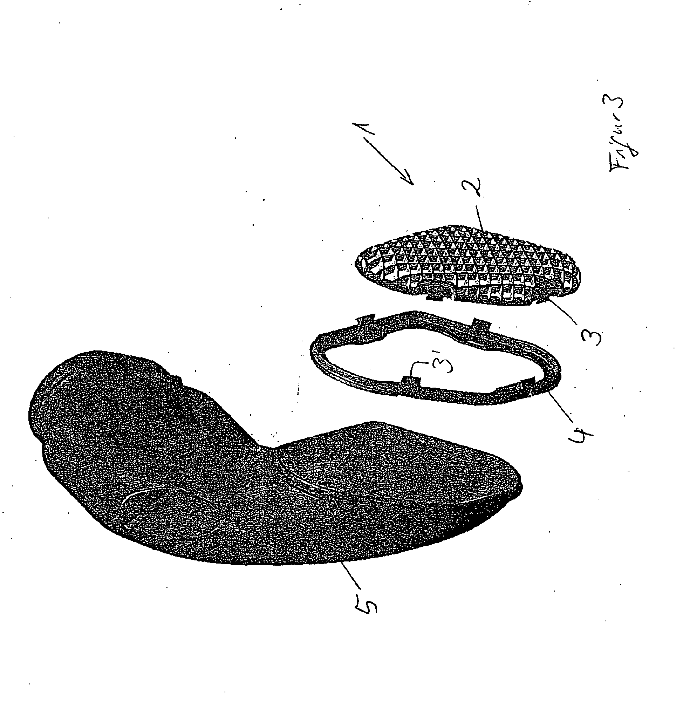

**Figur 3** zeigt eine erfindungsgemäße Zuführung 5 in einer Explosionsdarstellung. Die Zuführung 5 umfasst ein erfindungsgemäßen Filter 1 der am Eintrittende des Fluidstroms und im Querschnitt der Zuführung 5 angeordnet ist. Der Filter 1 ist mittels Mitteln zum Befestigen 3, 3' an eine Halterung 4 gesteckt, die mit der Zuführung 5 verschweißt ist. Die Mittel zum Befestigen 3, 3' sind Schnappverschlüsse.

Bei Verformung des Gitters 2 treten Spalten zwischen dem Gitter 2 und der Halterung 4 auf, die um so größer sind, je größer die Verformung des Gitters 2 ist, beispielsweise aufgrund eines hohen Druckgefälles und insbesondere bei starker Verschmutzung des Gitters 2. Dadurch durchströmt der Fluidstrom den Filter 1 durch die Spalten zumindest teilweise. Bei Verwendung der Zuführung 5 als Luftzuführung eines Verbrennungsmotors bleibt die Luftzufuhr - über diese sogenannte Falschluftzufuhr - daher auch bei starker Verschmutzung des Filters 1 zumindest teilweise erhalten, so dass der Verbrennungsmotor weiterhin betrieben werden kann, jedoch möglicherweise mit reduzierter Leistung. Zumindest bei und/oder nach Abstellen des Motors werden die Schmutzpartikel aufgrund des Zurückformens des Gitters 2 abgeworfen, so dass der Filter 1 gereinigt ist und der Verbrennungsmotor bei erneutem Start wieder mit im wesentlichen voller Leistung arbeitet.

Der erfindungsgemäße Filter 1 und/oder die erfindungsgemäße Zuführung 5 eignen sich besonders für Luftzuführungen, beispielsweise in Lüftungen, Klimaanlagen oder für Verbrennungsmotoren. Sie werden bevorzugt in Fahrzeugen, insbesondere Kraftfahrzeugen eingesetzt. Auch der Einsatz in Gebäudelüftungen, Klimatisierungsanlagen oder in Frischluftzuführungen für industrielle Fertigungsanlagen ist möglich.

### Bezügszeichenliste:

- 1: Filter
- 2: Gitter
- 3, 3': Mittel zum Befestigen, Schnappverschluss
- 4: Halterung
- 5: Zuführung
- R: Strömungsrichtung
- G: Grundform
- S: Strömungsform

## Patentansprüche

1. Filter (1) der ein Gitter (2) aufweist, welches in einem Fluidstrom anordenbar ist, wobei das Gitter (2), insbesondere bei einer Verschmutzung mit Schmutzpartikeln, beim Durchströmen des Fluidstromes in einer Strömungsrichtung (R) von einer Grundform (G) in eine Strömungsform (S) reversibel verformbar ist, wobei von dem Gitter (2) bei einer Rückverformung von der Strömungsform (S) in die Grundform (G) gegebenenfalls vorhandene Schmutzpartikel abwerfbar sind,
**dadurch gekennzeichnet, dass** das Gitter (2) in seiner Grundform (G) entgegen der Strömungsrichtung (R) bombiert ist und wobei das Gitter (2) selbstzurückformbar ausgeführt ist.

2. Filter nach Anspruch 1,
**dadurch gekennzeichnet, dass** die Rückverformung im Wesentlichen entgegen der Strömungsrichtung (R) erfolgt.

3. Filter (1) nach einem der vorherigen Ansprüche,
**dadurch gekennzeichnet, dass** die Verformung aufgrund eines Druckgefälles und/oder eines Strömungswiderstandes erfolgt.

4. Filter (1) nach einem der vorherigen Ansprüche,
**dadurch gekennzeichnet, dass** der Filter (1) in einem Gasstrom, bevorzugt in einem Luftstrom anordenbar ist.

5. Filter (1) nach einem der vorherigen Ansprüche,
**dadurch gekennzeichnet, dass** das Gitter (2) aus einem wärmestabilen Material, bevorzugt einem Kunststoff, besonders bevorzugt aus einem thermoplastischen Kunststoff, gefertigt ist.

6. Filter (1) nach einem der vorherigen Ansprüche,
**dadurch gekennzeichnet, dass** der Filter (1) Mittel zum Befestigen (4) aufweist, vorzugsweise Schnappverschlüsse.

7. Zuführung (5), insbesondere für Luft,
**dadurch gekennzeichnet, dass** die Zuführung (5) einen Filter (1) nach einem der Ansprüche 1-6 umfasst, dessen Gitter (2) im Querschnitt der Zuführung (5) angeordnet ist.

8. Zuführung (5) nach Anspruch 7,
**dadurch gekennzeichnet, dass** in Strömungsform (S) des Gitters (2) das Durchströmen des Fluids zumindest teilweise im Bereich der Mittel zum Befestigen (4) erfolgt.

9. Zuführung (5) nach einem der Ansprüche 7 oder 8,
**dadurch gekennzeichnet, dass** die Zuführung (5) ein Mittel zur Begrenzung der Verformung des Gitters (2) aufweist.

10. Zuführung (5) nach einem der Ansprüche 8 - 9,
**dadurch gekennzeichnet, dass** die Zuführung (5) ein Teil einer Luftzuführung für einen Verbrennungsmotor oder einer Lüftung eines Kraftfahrzeuges ist.

11. Kraftfahrzeug, aufweisend einen Filter (1) nach einem der Ansprüche 1-6 oder eine Zuführung (5) nach einem der Ansprüche 7-10.

12. Verfahren zum Selbstreinigen eines Filters (1) nach einem der Ansprüche 1-6,
**dadurch gekennzeichnet, dass** sich das Gitter (2) in Strömungsrichtung (R) verformt, wenn es von einem Fluid durchströmt wird, und dass sich dass Gitter (2) zurückverformt, wenn es nicht mehr durchströmt wird und dabei Schmutzpartikel abwirft.

13. Verwendung eines elastischen Gitters in einem Filter (1) nach einem der Anspruche 1-6, mit selbstreinigender Eigenschaft durch Verformung und Rückverformung aufgrund eines Druckunterschiedes auf beiden Seiten des Filters (1).

14. Verwendung nach Anspruch 13 in einem Kraftfahrzeug, insbesondere in einer Luftzuführung für einen Verbrennungsmotor oder in einer Lüftung des Kraftfahrzeuges.

## Claims

1. A filter (1) comprising a grid (2) for disposing in a flow of fluid, wherein the grid (2), especially when soiled with dirt particles, can reversibly change from a basic shape (G) into a flow shape (S) when flowed through in one direction (R), wherein any dirt particles are thrown off from the grid (2) when it returns from the flow shape (S) to the basic shape (G),
**characterised in that** the grid (2) when in its basic shape (G) is convex against the direction of flow (R) and wherein the grid (2) automatically returns to shape.

2. A filter according to claim 1,
**characterised in that** the return to shape occurs substantially against the direction of flow (R).

3. A filter (1) according to any of the preceding claims,
**characterised in that** the change of shape is due to a pressure drop and/or a flow resistance.

4. A filter (1) according to any of the preceding claims,
**characterised in that** the filter (1) is disposed in a flow of gas, preferably an air flow.

5. A filter (1) according to any of the preceding claims,
**characterised in that** the grid (2) is made of a heat-stable material, preferably a plastics material, especially preferably a thermoplastics material.

6. A filter (1) according to any of the preceding claims,
**characterised in that** the filter (1) comprises fastening means (4), preferably snap fasteners.

7. An inlet (5), especially for air,
**characterised in that** the inlet (5) comprises a filter according to any of claims 1 - 6, with a grid (2) disposed in the cross-section of the inlet (5).

8. An inlet (5) according to claim 7,
**characterised in that** when the grid (2) is in the flow shape (S) the fluid flows through at least partly in the region of the fastening means (4).

9. An inlet (5) according to claim 7 or claim 8,
**characterised in that** the inlet (5) comprises a means for limiting the change of shape of the grid.

10. An inlet (5) according to claims 8-9,
**characterised in that** the inlet (5) is part of an air supply for an internal combustion engine or a ventilation system of a motor vehicle.

11. A motor vehicle comprising a filter (1) according to claims 1 - 6 or an inlet (5) according to any of claims 7 - 10.

12. A method of automatically cleaning a filter (1) according to any of claims 1 - 6,
**characterised in that** the grid (2) changes shape in the direction of flow (R) when a fluid flows through it and when the flow stops the grid (2) returns to its original shape and throws off dirt particles.

13. Use of an elastic grid (2) in a filter (1) according to any of claims 1 - 6, with self-cleaning properties through change of shape and return to shape owing to a pressure difference between the two sides of the filter (1 ).

14. Use according to claim 13 in a motor vehicle, especially in an air supply for an internal combustion engine or a ventilation system for the motor vehicle.

## Revendications

1. Filtre (1) comportant une grille (2) qui s'installe dans une veine de fluide,
la grille (2) se déformant de manière réversible d'une forme de base (G) en une forme d'écoulement (S), notamment lorsqu'elle est encrassée de particules de saletés, lors du passage de la veine de fluide dans une direction d'écoulement (R),
et lors de la déformation en retour de la forme d'écoulement (S) à la forme de base (G), la grille éjecte des particules de saletés éventuellement présentes,
**caractérisé en ce que**
dans sa forme de base (G) le filtre (2) est bombé dans la direction opposée à la direction d'écoulement (R) et la grille (2) se déforme automatiquement en sens inverse.

2. Filtre selon la revendication 1,
**caractérisé en ce que**
la déformation en sens inverse se fait pratiquement dans la direction opposée à la direction d'écoulement (R).

3. Filtre (1) selon l'une des revendications précédentes,
**caractérisé en ce que**
la déformation se fait par la chute de pression et/ou par la perte de charge.

4. Filtre (1) selon l'une des revendications précédentes,
**caractérisé en ce que**
le filtre (1) est installé dans une veine de gaz, de préférence dans une veine d'air.

5. Filtre (1) selon l'une des revendications précédentes,
**caractérisé en ce que**
la grille (2) est en une matière thermiquement stable, de préférence en une matière plastique et plus particulièrement en une matière thermoplastique.

6. Filtre (1) selon l'une des revendications précédentes,
**caractérisé en ce que**
le filtre (1) comporte des moyens de fixation (4), de préférence des liaisons par enclipsage.

7. Alimentation (5), notamment pour de l'air,
**caractérisée en ce que**
l'alimentation (5) comporte un filtre (1) selon l'une des revendications 1 à 6 dont la grille (2) est installée dans la section de l'alimentation (5).

8. Alimentation (5) selon la revendication 7,
**caractérisée en ce que**
dans la forme d'écoulement (S) de la grille (2), le passage du fluide se fait au moins en partie dans la région des moyens de fixation (4).

9. Alimentation (5) selon l'une des revendications 7 ou 8,
**caractérisée en ce que**
l'alimentation (5) comporte un moyen pour délimiter la déformation de la grille.

10. Alimentation (5) selon l'une des revendications 8 et 9,
**caractérisée en ce que**
l'alimentation (5) fait partie d'une alimentation en air d'un moteur à combustion interne ou d'une alimentation en air d'un véhicule automobile.

11. Véhicule automobile comportant un filtre (1) selon l'une des revendications 1 à 6 ou une alimentation (5) selon l'une des revendications 7 à 10.

12. Procédé d'auto-nettoyage d'un filtre selon l'une des revendications 1 à 6,
**caractérisé en ce que**
la grille (2) se déforme dans le sens de passage (R) lorsque la grille est traversée par un fluide, et la grille (2) reprend sa forme lorsqu'il n'y a plus de passage de fluide, de façon à éjecter ainsi les particules de saletés.

13. Application d'une grille élastique (2) à un filtre (1) selon l'une des revendications 1 à 6, ayant une propriété d'auto-nettoyage par déformation et retour à la forme initiale sous l'effet d'une différence de pression de part et d'autre du filtre (1).

14. Application selon la revendication 13 à un véhicule automobile, notamment à une alimentation en air d'un moteur à combustion interne ou dans une alimentation en air du véhicule.
